# EUROPÄISCHE PATENTSCHRIFT

(11) **EP 0 587 146 B1**
(45) Veröffentlichungstag und Bekanntmachung des Hinweises auf die Patenterteilung: **05.03.1997**
(21) Anmeldenummer: 93114429.9
(22) Anmeldetag: 08.09.1993
(51) Int. Cl.: F01N 3/02, F01N 9/00

(54) **Vorrichtung zur Ermittlung des Beladungszustands von Partikelfiltern**
Device for determination of the loading state of particle filters
Appareil pour déterminer l'état de chargement de filtres à particules

(30) Priorität: 09.09.1992 DE 4230180
(43) Veröffentlichungstag der Anmeldung: 16.03.1994
(73) Patentinhaber: Firma J. Eberspächer, 73730 Esslingen (DE)
(72) Erfinder: Pfister, Wolfgang, Dipl.-Ing., D-7300 Esslingen (DE); Blaschke, Walter, Dipl.-Ing., D-7300 Esslingen (DE); Burner, Erwin, Dipl.-Ing., D-7327 Adelberg (DE); Wacker, Heinrich, Dipl.-Phys., D-7315 Weilheim/Teck (DE); Steiner, Peter, Dipl.-Ing., D-7307 Aichwald 2 (DE)
(74) Vertreter: Klunker . Schmitt-Nilson . Hirsch

(56) Entgegenhaltungen:
- EP-A- 0 220 484
- EP-A- 0 260 031
- EP-A- 0 411 445
- EP-A- 0 446 400

## Beschreibung

Die zur Abgasreinigung bei Dieselmotoren zunehmend eingesetzten Partikelfilter, die neben dem Herausfiltern anderer schädlicher Gasbestandteile des Motorabgases insbesondere zum Herausfiltern von im Abgas mitgeführten Rußpartikeln dienen, müssen, um ihre Funktionsfähigkeit zu erhalten, einer häufigen Reinigung (Regeneration) unterzogen werden. Hierbei hat sich insbesondere die thermische Regeneration von Partikelfiltern als effektiv erwiesen, bei der durch Einführung hochtemperierter Heizgase (etwa 600°C bis 900°C) die im Partikelfilter enthaltenen Rußpartikel entzündet und verbrannt werden.

Zur Durchführung der thermischen Regeneration von Partikelfiltern sind im wesentlichen drei Verfahren, nämlich die Standregeneration, die Wechselregeneration und die Vollstromregeneration, bekannt. Bei der Standregeneration erfolgt das Ausbrennen des Partikelfilters bei Stillstand des Kraftfahrzeugmotors mittels einer hierzu vorgesehenen, motorunabhängigen Heizeinrichtung. Die Wechselregeneration ermöglicht eine thermische Regenerierung des Partikelfilters während des Kraftfahrzeugbetriebs. Hierzu sind zwei Partikelfilter parallelgeschaltet, wobei wechselweise ein Partikelfilter vom Motorabgas durchströmt wird, und der andere vom Abgassystem entkoppelte Partikelfilter für die Zeit der thermischen Regenerierung von einem, durch eine motorunabhängige Heizeinrichtung temperierten Heizgas durchströmt wird. Bei der Vollstromregeneration, bei der die Regenerierung ebenso während des Kraftfahrzeugbetriebes erfolgt, wird in den permanent im Abgasstrom befindlichen Partikelfilter für die Zeit der Regenerierung ein durch eine motorunabhängige Heizeinrichtung erzeugter Heizgasstrom mit dem Motorabgas vermischt und zusammen mit diesem in den Partikelfilter eingeleitet, um die genannte, für die Regenerierung erforderliche Gastemperatur zu erreichen.

Unabhängig von der Wahl des durchgeführten Regenerierungsverfahrens ist es natürlich nur dann erforderlich, eine thermische Regeneration durchzuführen, wenn ein bestimmter Beladungszustand des Partikelfilters erreicht ist, bei dem entweder die Wirksamkeit des Filters nicht mehr gegeben ist, oder der durch den zugesetzten Filter entstehende Abgasgegendruck sich nachteilig auf die Motorleistung auswirkt, oder der Filter durch weitere Beladung bei der nächsten Regeneration aufgrund der bei der Rußverbrennung frei werdenden Wärme thermisch zerstört werden würde.

Die Erfindung betrifft eine Vorrichtung zur Ermittlung des Beladungszustands eines Partikelfilters in dem Abgassystem eines mit einem Abgaslader ausgestatteten Dieselmotors, aufweisend:
(a) eine Druckmeßeinrichtung, die den Druck vor dem Partikelfilter und/oder die Druckdifferenz über den Partikelfilter erfaßt;
(b) eine Temperaturmeßeinrichtung, die die Temperatur des Abgases im Bereich des Partikelfilters erfaßt;
(c) eine weitere Meßeinrichtung, die eine dem Volumenstrom des den Dieselmotor durchströmenden Gases proportionale, motorspezifische Größe, vorzugsweise die Motordrehzahl, erfaßt;
(d) und eine Recheneinrichtung, die unter Berücksichtigung der von der Druckmeßeinrichtung, der Temperaturmeßeinrichtung und der weiteren Meßeinrichtung gelieferten Werte einen Ist-Kennwert bildet und diesen Ist-Kennwert mit einem vorgegebenen Grenzkennwert vergleicht.

Eine derartige Vorrichtung ist aus der EP-A-0 260 031 bekannt. Zur Ermittlung des Beladungszustands des Filters wird nicht nur der Druckabfall des Abgases bei Durchströmung des Filters bzw. der Druckaufbau vor dem Filter erfaßt, sondern auch die Temperatur des Abgases am Filter und der sich in Abhängigkeit von der Motordrehzahl ändernde Volumenstrom durch den Filter berücksichtigt. Obwohl die EP-A-0 260 031 das Abgassystem eines mit einem Abgaslader ausgestatteten Dieselmotors zeigt, werden dort spezifische Größen des Ladevolumenstroms nicht für die Bestimmung des Ist-Kennwertes berücksichtigt.

Der Erfindung liegt die Aufgabe zugrunde, eine Vorrichtung anzugeben, die eine einfache Ermittlung des tatsächlich gegebenen Beladungszustands des Partikelfilters unter Berücksichtigung der gegebenen Motorbetriebsverhältnisse für den Fall eines Abgassystems mit Abgaslader ermöglicht.

Zur Lösung dieser Aufgabe ist die Vorrichtung erfindungsgemäß dadurch gekennzeichnet,
(e) daß eine zweite Druckmeßeinrichtung vorgesehen ist, die den Druck des dem Dieselmotor zugeführten Gasstroms erfaßt;
(f) daß eine zweite Temperaturmeßeinrichtung vorgesehen ist, die die Temperatur des dem Dieselmotor zugeführten Gasstroms erfaßt;
(g) und daß die Recheneinrichtung den Ist-Kennwert unter zusätzlicher Berücksichtigung der von der zweiten Druckmeßeinrichtung und der zweiten Temperaturmeßeinrichtung gelieferten Werte bildet.

Durch Vergleich des Ist-Kennwertes mit einem empirisch ermittelten Grenzkennwert ist die Abweichung als Differenz erfaßbar, um bei hinreichend geringer Differenz, deren Größe definitionsgemäß zwischen null und einem beliebigen Wert liegen kann, einen Regenerierungsvorgang einzuleiten. Dabei kann der Grenzwert etwa als in Prüfstandsversuchen unter Berücksichtigung von verschiedenen Beladungszuständen und Volumenströmen ermittelter Grenzkennlinienverlauf vorgegeben werden. In der Regel wird der zulässige Grenzwert in Abhängigkeit von der Höhe des zugelassenen Drehmomentenabfalls, der sich infolge des durch den Partikelfilter im Abgassystem verursachten Abgasgegendrucks einstellt, festgelegt.

Vorteilhaft wird als Temperaturwert des Abgasvolumenstroms die mittlere Volumenstromtemperatur im Partikelfilter herangezogen. Neben den filterspezifischen Größen, nämlich dem Druck vor dem Partikelfilter und/oder dem Druckabfall über den Partikelfilter und der Temperatur des Abgasvolumenstroms im Partikelfilter, werden auch spezifische Größen des Ladevolumenstroms, nämlich die Temperatur und der Druck des Ladevolumenstroms, bei der Bestimmung des Ist-Kennwertes des Beladungszustands berücksichtigt.

Vorzugsweise wird bei Feststellung des Vorliegens einer hinreichend geringen Differenz zwischen einem Ist-Kennwert und einem entsprechenden Grenzkennwert eine Anzeigeeinrichtung aktiviert, die, etwa bei Verwendung in einem Kraftfahrzeug, den Kraftfahrzeugführer vom kritischen Beladungszustand des Partikelfilters in Kenntnis setzt. Dieser kann dann eine Regeneration des Partikelfilters gemäß einem der eingangs geschilderten Regenerationsverfahren in Gang setzen.

Eine weitere Möglichkeit besteht darin, die Anzeigeeinrichtung mit einer Starteinrichtung zur automatischen Auslösung eines der geschilderten Regenerationsverfahren zu koppeln, oder etwa auch bei Feststellung eines kritischen Differenzwertes unmittelbar die Starteinrichtung auszulösen, ohne vorher den Wert zur Anzeige zu bringen.

Wenn eine Anzeigeeinrichtung vorgesehen wird, erweist es sich als besonders vorteilhaft, den erfindungsgemäß ermittelten Ist-Kennwert, ausgehend von einem eine festgelegte Differenz zum Grenzkennwert aufweisenden Anfangskennwert, kontinuierlich oder in vorgegebenen zeitlichen Abständen zur Anzeige zu bringen, um das Fortschreiten des Beladungszustands von außen her sichtbar zu machen, so daß die Notwendigkeit der Durchführung einer Partikelfilterregeneration im voraus erkennbar ist.

Die erfindungsgemäße Vorrichtung kann zusätzlich eine Anzeigeeinrichtung aufweisen, die dazu dient, das Erreichen des Grenzkennwertes und/oder die durch den Vergleich in der Recheneinrichtung ermittelte Differenz zwischen dem Ist-Kennwert und dem Grenzkennwert anzuzeigen. Wenn die Anzeigeeinrichtung derart ausgebildet ist, daß sie lediglich das Erreichen des Grenzkennwertes anzeigt, ist für den Kraftfahrzeugführer das Signal gegeben, einen Regenerierungsvorgang beim Partikelfilter vorzunehmen. Bei Anzeige der Differenz zwischen dem Ist-Kennwert und dem Grenzkennwert besteht für den Kraftfahrzeugführer die Möglichkeit, sich ständig über den Fortschritt des Beladungszustands zu informieren und den Zeitpunkt für die Druchführung einer Regenerierung in gewissem Umfang selbst zu bestimmen.

Es ist möglich, neben der Anzeigeeinrichtung oder anstatt dieser eine in Abhängigkeit von der Differenz zwischen dem Ist-Kennwert und dem Grenzkennwert betätigbare Starteinrichtung vorzusehen, die ein In-Gang-Setzen einer Regenerierungseinrichtung, insbesondere einer Brennereinrichtung zur thermischen Regeneration, bewirkt.

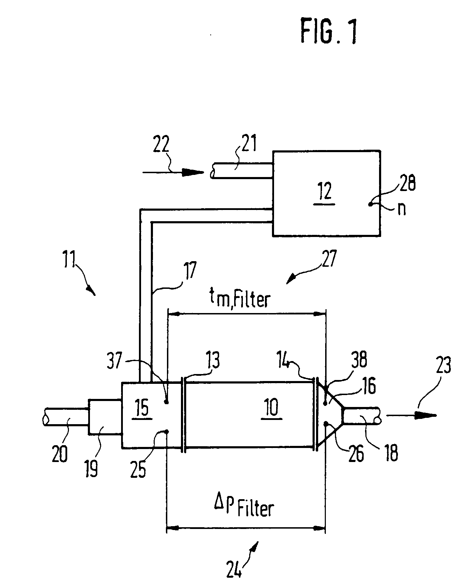

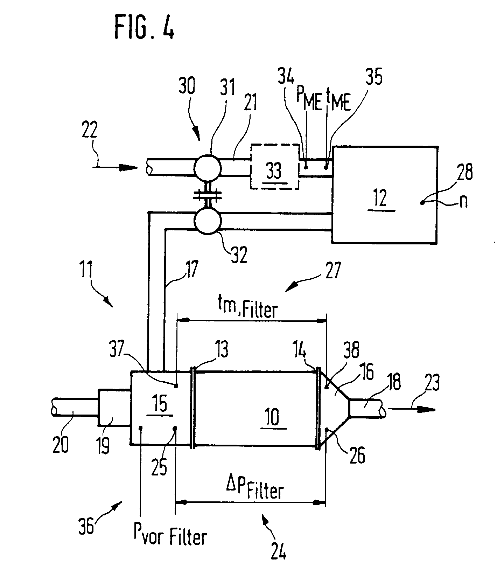

Die erfindungsgemäße Vorrichtung zur Ermittlung des Beladungszustands eines Partikelfilters werden nachfolgend anhand der Zeichnungen näher erläutert. Die Vorrichtung gemäß Fig. 1 bis 3 ist nicht patentgemäß, weil kein Abgaslader vorhanden ist; sie wird beschrieben, um das Verständnis der Vorrichtung gemäß Fig. 4 bis 6 zu erleichtern. Es zeigen:
- **Fig. 1**: einen bei einem als Saugmotor ausgebildeten Dieselmotor zwischen Komponenten eines Abgassystems installierten Partikelfilter mit am Motor und im Bereich des Partikelfilters angeordneten Meßeinrichtungen;
- **Fig. 2**: ein Diagramm mit Darstellung eines beispielhaften Grenzkennlinienverlaufs für den Beladungszustand eines im Abgassystem eines als Saugmotor ausgebildeten Dieselmotors angeordneten Partikelfilters;
- **Fig. 3**: ein Flußdiagramm zur Darstellung der Beladungszustandsermittlung bei einem im Abgassystem eines als Saugmotor ausgebildeten Dieselmotors angeordneten Partikelfilter;
- **Fig. 4**: einen bei einem mit einem Abgaslader versehenen Dieselmotor zwischen Komponenten des Abgassystems installierten Partikelfilter mit im Bereich des Motors und im Bereich des Partikelfilters installierten Meßeinrichtungen;
- **Fig. 5**: ein Diagramm mit Darstellung eines beispielhaften Grenzkennlinienverlaufs für die Beladung eines im Abgassystem eines mit einem Abgaslader versehenen Dieselmotors angeordneten Partikelfilters;
- **Fig. 6**: ein Flußdiagramm zur Darstellung der Beladungszustandsermittlung bei einem im Abgassystem eines mit einem Abgaslader versehenen Dieselmotors angeordneten Partikelfilter.

**Fig. 1** zeigt einen Partikelfilter 10, der in einem Abgassystem 11 eines als Saugmotor betriebenen Dieselmotors 12 angeordnet ist. Der Partikelfilter 10 ist über Flanschverbindungen 13, 14 auf seiner Eingangsseite mit einer Vorkammer 15 und auf seiner Ausgangsseite mit einem Reduzierstück 16 verbunden. Die Vorkammer 15 ist mit dem Dieselmotor 12 über ein Abgasrohr 17 verbunden. Das Reduzierstück 16 geht strömungsabseitig in ein Abgasrohr 18 über, durch das die Motorabgase in Richtung auf das freie Ende des Abgassystems 11 abgeleitet werden. Ein durch eine Ansaugleitung 21 dem Dieselmotor 12 zugeführter Luftstrom 22 wird in der in **Fig. 1** schematisch dargestellten Anlage im Dieselmotor 12 unter Zuführung von Brennstoff verbrannt, und die entstehenden Abgase werden durch das Abgasrohr 17, die Vorkammer 15, den Partikelfilter 10, das Reduzierstück 16 und das anschließende Abgasrohr 18 sowie durch weitere nicht dargestellte Abgassystemkomponenten hindurch als Abgasstrom 23 ins Freie geleitet, nachdem im Partikelfilter 10 die Rußbestandteile und sonstige schädliche Bestandteile im wesentlichen aus dem Abgasstrom herausgefiltert worden sind.

Für die Regeneration des Partikelfilters 10 ist eine Brennkammer 19 vorgesehen, die zur Aufheizung eines in diese durch eine Zuführung 20 eingeleiteten Gasstroms dient. Bei einer Regeneration wird der durch die Zuführung 20 eingeleitete Gasstrom zur Erzielung der für die Regeneration notwendigen Abgastemperatur in der Brennkammer 19 aufgeheizt und mit dem durch das Abgasrohr 17 in die Vorkammer 14 einströmenden Abgasstrom vermischt.

Um am eingebauten Partikelfilter 10 den Beladungszustand feststellen zu können, sind in der in **Fig**. **1** dargestellten Anlage verschiedene Meßeinrichtungen vorgesehen. Im Bereich des Partikelfilters 10 ist eine Differenzdruckmeßeinrichtung 24 vorgesehen, die bei dem hier dargestellten Ausführungsbeispiel zwei Meßfühler 25, 26 aufweist. Dabei ist der Meßfühler 25 zur Messung des Drucks im Abgasvolumenstrom vor Eintritt in den Partikelfilter und der Meßfühler 26 zur Messung des Drucks im Abgasvolumenstrom nach Austritt aus dem Partikelfilter 10 vorgesehen. Insgesamt wird durch die Differenzdruckmeßeinrichtung 24 auf bekannte Art und Weise der zwischen den Einbauorten der Meßfühler 25, 26 herrschende Differenzdruck, also der Druckabfall über den Partikelfilter 10, ermittelt. Darüber hinaus dient der dem Partikelfilter 10 vorgeordnete Meßfühler 25 zur Zustandsbeschreibung des Abgases am Filtereintritt.

Als weitere Meßeinrichtung im Bereich des Partikelfilters 10 ist eine mit Meßfühlern 37, 38 versehene Temperaturmeßeinrichtung 27 vorgesehen, mittels der die mittlere Temperatur des Abgasvolumenstroms im Partikelfilter 10 bestimmbar ist. Schließlich ist eine an den Dieselmotor 12 angeschlossene Drehzahlmeßeinrichtung 28 vorgesehen.

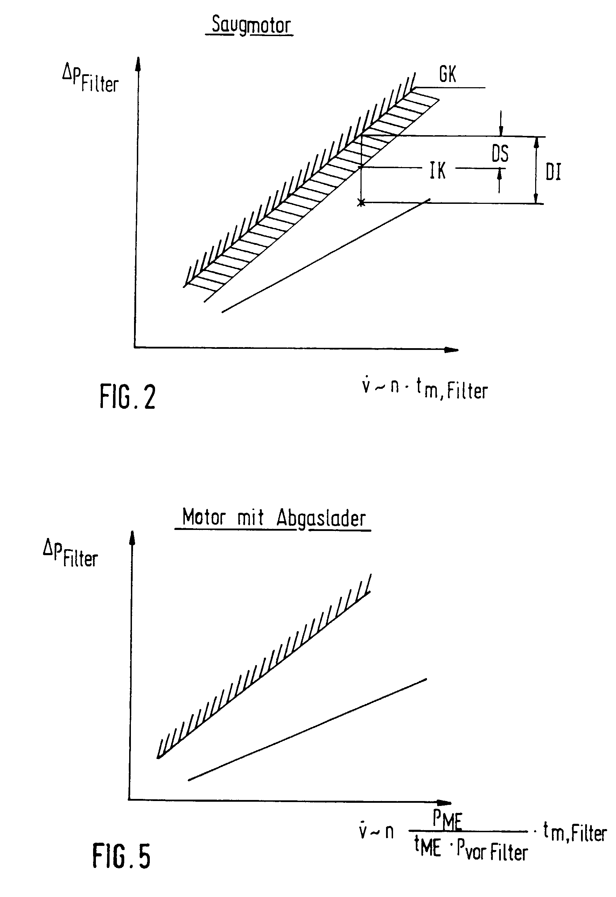

Es wurde herausgefunden, daß zwischen dem Quotienten aus dem durch die Differenzdruckmeßeinrichtung 24 ermittelten Filterdifferenzdruck Δp_{Filter} und der mittels der Temperaturmeßeinrichtung 27 ermittelten mittleren Filtertemperatur tₘ sowie der über die Drehzahlmeßeinrichtung 28 ermittelten volumenstromproportionalen Drehzahl des Dieselmotors 12 die in **Fig. 2** dargestellte Beziehung herrscht. Der obere der beiden in **Fig. 2** dargestellten Graphen gibt den Grenzkennwert für die Beladung des Partikelfilters wieder, der durch den Gradienten des Graphen konstant definiert ist. Dieser Grenzkennwert GK kann etwa in Prüfstandsversuchen ermittelt werden, wobei der Grenzkennwert für den Beladungszustand des Partikelfilters etwa in Abhängigkeit vom zulässigen Leistungsverlust des Dieselmotors infolge der Zusetzung des Partikelfiltern mit Rußpartikeln und ähnlichem festgelegt wird.

Der zweite, untere Graph stellt im Vergleich zu dem durch den oberen Graphen wiedergegebenen maximal zulässigen Beladungszustand den unbeladenen Zustand des Partikelfilters dar.

Aufgrund des in **Fig. 2** dargestellten, herausgefundenen Zusammenhangs zwischen den thermodynamischen Größen Δp_{Filter} und t_{m,Filter} und der Motordrehzahl n ist es daher möglich, durch Vergleich eines durch die genannten Größen definierten Betriebspunktes des Partikelfilters mit der zulässigen Beladungsgrenze GK festzustellen, ob der maximal zulässige Beladungszustand erreicht ist bzw. wie weit der durch den Betriebspunkt definierte aktuelle Beladungszustand des Partikelfilters vom zulässigen Beladungszustand entfernt ist.

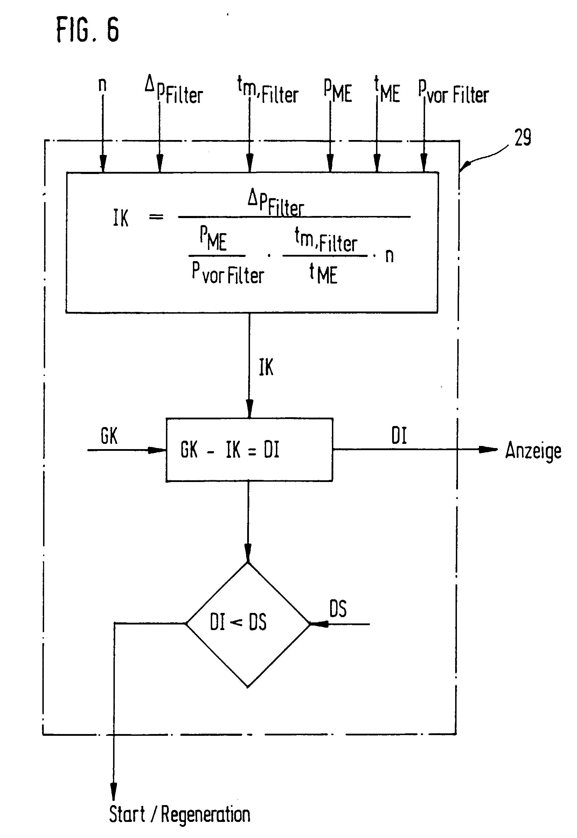

Der in **Fig. 2** und später nachfolgend in **Fig. 5** dargestellte Zusammenhang mit dem Filterdifferenzdruck Δp_{Filter} als Beladungsindikator gilt ebenso, wenn anstatt des Filterdifferenzdrucks Δp_{Filter} der Absolutdruck oder der Relativdruck vor dem Filter als Beladungsindikator verwendet werden.

Beispielhaft ist in **Fig. 2** ein den aktuellen Beladungszustand, also den Betriebspunkt des Partikelfilters, kennzeichnender Ist-Kennwert IK eingetragen. Wie in **Fig. 2** weiter dargestellt, besteht in diesem Betriebspunkt des Partikelfilters zwischen dem Grenzkennwert GK und dem Ist-Kennwert IK eine Ist-Differenz DI. Der maximale Beladungszustand ist daher in diesem Punkt auf jeden Fall noch nicht erreicht. Das bedeutet, daß eine Regenierung des Partikelfilters noch nicht eingeleitet werden muß. Dies ist erst dann der Fall, wenn der Ist-Kennwert IK gleich dem Grenzkennwert GK ist. Da es sich in manchen Fällen auch als vorteilhaft erweisen kann, den Regenerierungsvorgang bereits vor Erreichen des durch den Grenzkennwert GK maximal zulässigen Beladungszustands einzuleiten oder zumindest vor dem Eintreten des maximalen Beladungszustands Kenntnis von dem in Kürze zu erwartenden Eintreten des maximalen Beladungszustands zu erhalten, erweist es sich, insbesondere bei einer Darstellung des aktuellen Beladungszustands auf einer Anzeigeeinrichtung als vorteilhaft, eine (in **Fig. 2** kreuzschraffiert dargestellte) Toleranzzone über eine Soll-Differenz DS zwischen dem Grenzkennwert GK und dem Ist-Kennwert IK zu definieren. Hierbei kann dann für den Fall, daß DI gleich DS ist, die Regenerierung des Partikelfilters eingeleitet werden bzw. die Notwendigkeit einer demnächst durchzuführenden Regenerierung des Partikelfilters angezeigt werden.

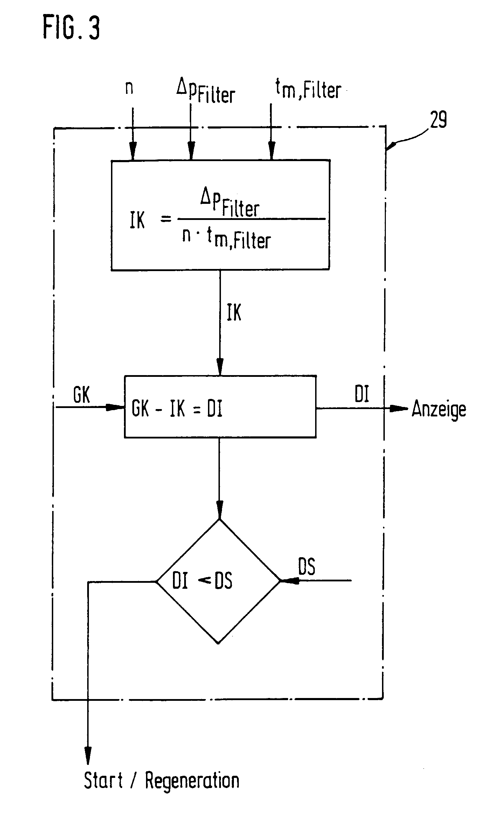

**Fig. 3** zeigt anhand eines Flußdiagramms, wie das Verfahren zur Ermittlung des Beladungszustands eines im Abgassystem eines als Saugmotor betriebenen Dieselmotors angeordneten Partikelfilters ablaufen kann. Die mittels der in **Fig. 1** dargestellten Meßeinrichtungen 24, 27, 28 erfaßten thermodynamischen Größen Δp_{Filter} und t_{m,Filter} sowie die volumenstromproportionale Motordrehzahl n werden an eine Recheneinrichtung 29 übergeben. In der Recheneinrichtung 29 findet zunächst die Berechnung des Ist-Kennwertes als Quotient aus dem Filterdifferenzdruck Δp_{Filter} und dem Produkt aus der Motordrehzahl n und der mittleren Filtertemperatur t_{m,Filter} statt. Anschließend wird die Ist-Differenz DI zwischen dem berechneten Ist-Kennwert IK und dem Grenzkennwert GK gebildet und zur Anzeige gebracht.

Gemäß der Darstellung in **Fig. 3** erfolgt nach Berechnung der Ist-Differenz DI die Überprüfung, ob die Ist-Differenz DI kleiner ist als eine vorgegebene Soll-Differenz DS. Bejahendenfalls erfolgt hieran anschließend das In-Gang-Setzen der Regenerationseinrichtung, also etwa das In-Gang-Setzen der in **Fig. 1** dargestellten Brennkammer 19.

Natürlich ist es auch möglich, den Vergleich nicht erst nach Berechnung der Ist-Differenz DI durchzuführen, sondern den Ist-Kennwert IK unmittelbar mit dem Grenzkennwert GK zu vergleichen und bei Feststellung eines Übereinstimmens der Kennwerte bzw. des Überschreitens des Grenzkennwertes GK den Regenerationsvorgang einzuleiten.

**Fig. 4** zeigt einen Partikelfilter 10, der im Abgassystem 11 eines mit einem Abgaslader 30 versehenen Dieselmotors 12 angeordnet ist. Die in **Fig. 4** dargestellten, mit den Komponenten in **Fig. 1** übereinstimmenden Komponenten des Abgassystems 11 weisen mit **Fig. 1** übereinstimmende Bezugszeichen auf. Im Unterschied zu der in **Fig. 1** dargestellten Anlage ist in **Fig. 4** der dem Dieselmotor 12 vorgeschaltete Abgaslader 30 vorgesehen. Der Abgaslader 30 besteht im wesentlichen aus einem in die Ansaugleitung 21 geschalteten Verdichter 31, der über eine, an den Verdichter 31 angekoppelte Abgasturbine 32, die im Abgasrohr 17 angeordnet ist, angetrieben wird. Optional kann zwischen dem Verdichter 31 des Abgasladers 30 und dem Eingang zum Dieselmotor 12 in der Ansaugleitung 21 ein Zwischenkühler 33 vorgesehen werden.

Neben den bereits in der Anlage gemäß **Fig. 1** vorgesehenen Meßeinrichtungen, nämlich der Differenzdruckmeßeinrichtung 24, der Drehzahlmeßeinrichtung 28 und der Temperaturmeßeinrichtung 27 sind in der in **Fig. 4** dargestellten Anlage weitere Meßeinrichtungen vorgesehen. Zum einen befinden sich in der Ansaugleitung 21, dem Motoreingang unmittelbar vorgeordnet, eine Druckmeßeinrichtung 34 zur Messung des Drucks im Volumenstrom am Motoreingang p_{ME} und eine Temperaturmeßeinrichtung 35 zur Messung der Temperatur t_{ME} des in den Dieselmotor 12 eintretenden Volumenstroms 22. Bei einer vereinfachten Ausführungsform kann auf die Temperaturmeßeinrichtung 35 auch verzichtet werden. Darüber hinaus ist im Eintrittsbereich des Abgasvolumenstroms in den Partikelfilter 10, hier in der Vorkammer 15, eine den Filtervordruck p_{vorFilter} erfassende Druckmeßeinrichtung 36 angeordnet. Natürlich kann die Druckmeßeinrichtung 36 auch aus dem Meßfühler 25 der Differenzdruckmeßeinrichtung 24 gebildet sein, so daß die Druckmeßeinrichtung 36 quasi einen Bestandteil der Differenzdruckmeßeinrichtung 24 bildet.

Das in **Fig. 5** dargestellte Diagramm zeigt den festgestellten linearen Zusammenhang zwischen dem Filterdifferenzdruck Δp_{Filter} und der mittleren Filtertemperatur t_{m,Filter} sowie dem in den Dieselmotor eingeleiteten Volumenstrom. Aufgrund der durch den Abgaslader 30 erfolgten Verdichtung des in den Dieselmotor 12 eingeleiteten Volumenstroms ist die in **Fig. 5** längs der Abszisse aufgetragene volumenstromproportionale Größe nicht allein (wie in **Fig. 2** dargestellt) drehzahlabhängig, sondern wird auch bestimmt durch den Quotienten aus dem Motoreintrittsdruck p_{ME} und dem Produkt aus der Motoreintrittstemperatur t_{ME} und dem Filtervordruck p_{vorFilter}.

Ansonsten gelten in **Fig. 5** ebenso die in **Fig. 2** dargestellten Zusammenhänge betreffend den Grenzkennwert GK, den Ist-Kennwert IK, die Soll-Differenz DS und die Ist-Differenz DI.

**Fig. 6** zeigt anhand eines Flußdiagramms, wie ein Verfahren zur Ermittlung des Beladungszustands eines Partikelfilters, der im Abgassystem eines mit einem Abgaslader versehenen Dieselmotors angeordnet ist, ablaufen kann. Zunächst werden die mittels der in **Fig. 4** dargestellten Meßeinrichtungen erfaßten Meßwerte, nämlich die Motordrehzahl n, der Filterdifferenzdruck Δp_{Filter}, die mittlere Filtertemperatur t_{m,Filter}, der Motoreintrittsdruck p_{ME}, die Motoreintrittstemperatur t_{ME} und der Filtervordruck p_{vorFilter} an die Recheneinrichtung 29 übergeben. Daran anschließend wird zur Berechnung des Ist-Kennwertes IK die in **Fig. 6** dargestellte Rechenoperation durchgeführt.

Der weitere, in **Fig. 6** dargestellte Ablauf entspricht dem in **Fig. 3** nach Berechnung des Ist-Kennwertes IK dargestellten Ablauf, so daß zur weiteren Erläuterung auf die Beschreibung von **Fig. 3** verwiesen wird.

## Patentansprüche

1. Vorrichtung zur Ermittlung des Beladungszustands eines Partikelfilters (10) in dem Abgassystem eines mit einem Abgaslader (30) ausgestatteten Dieselmotors (12), aufweisend:
(a) eine Druckmeßeinrichtung (24; 36), die den Druck vor dem Partikelfilter (10) und/oder die Druckdifferenz über den Partikelfilter (10) erfaßt;
(b) eine Temperaturmeßeinrichtung (27), die die Temperatur des Abgases im Bereich des Partikelfilters (10) erfaßt;
(c) eine weitere Meßeinrichtung (28), die eine dem Volumenstrom des den Dieselmotor (12) durchströmenden Gases proportionale, motorspezifische Größe, vorzugsweise die Motordrehzahl (n), erfaßt;
(d) und eine Recheneinrichtung (27), die unter Berücksichtigung der von der Druckmeßeinrichtung (24; 36), der Temperaturmeßeinrichtung (27) und der weiteren Meßeinrichtung (28) gelieferten Werte einen Ist-Kennwert (IK) bildet und diesen Ist-Kennwert (IK) mit einem vorgegebenen Grenzkennwert (GK) vergleicht,
dadurch gekennzeichnet,
(e) daß eine zweite Druckmeßeinrichtung (34) vorgesehen ist, die den Druck des dem Dieselmotor (12) zugeführten Gasstroms erfaßt;
(f) daß eine zweite Temperaturmeßeinrichtung (35) vorgesehen ist, die die Temperatur des dem Dieselmotor (12) zugeführten Gasstroms erfaßt;
(g) und daß die Recheneinrichtung (29) den Ist-Kennwert unter zusätzlicher Berücksichtigung der von der zweiten Druckmeßeinrichtung (34) und der zweiten Temperaturmeßeinrichtung (35) gelieferten Werte bildet.

2. Vorrichtung nach Anspruch 1,
gekennzeichnet durch
eine Anzeigeeinrichtung zum Anzeigen des Erreichens des Grenzkennwertes (GK) und/oder der Differenz des Ist-Kennwertes (IK) zum Grenzkennwert (GK).

3. Vorrichtung nach Anspruch 1 oder 2,
gekennzeichnet durch
eine Starteinrichtung, die bei hinreichend geringer Differenz des Ist-Kennwerts (IK) zum Grenzkennwert (GK) eine Brennereinrichtung (19) zur thermischen Regeneration des Partikelfilters (10) in Gang setzt.

## Claims

1. A device for determining the load condition of a particle filter (10) in the exhaust gas system of a diesel engine (12) provided with an exhaust gas charger (30), comprising:
(a) a pressure measuring means (24; 36) sensing the pressure upstream of the particle filter (10) and/or the pressure differential across the particle filter (10);
(b) a temperature measuring means (27) sensing the temperature of the exhaust gas in the region of the particle filter (10);
(c) an additional measuring means (28) sensing a quantity that is specific for the engine and proportional to the volume flow of the gas flowing through the diesel engine (12), this quantity being preferably the engine speed (n);
(d) and a computer means (27) for forming an actual characteristic value (IK) in consideration of the values delivered by the pressure measuring means (24; 36), the temperature measuring means (27) and the additional measuring means (28), as well as for comparing this actual characteristic value (IK) to a predetermined limit characteristic value (GK),
characterized in that
(e) a second pressure measuring means (34) is provided for sensing the pressure of the gas flow supplied to the diesel engine (12);
(f) that a second temperature measuring means (35) is provided for sensing the temperature of the gas flow supplied to the diesel engine (12);
(g) and in that the computer means (29) forms the actual characteristic value in additional consideration of the values delivered by the second pressure measuring means (34) and the second temperature measuring means (35).

2. A device according to claim 1,
characterized by
a display means for displaying the reaching of the limit characteristic value (GK) and/or the difference of the actual characteristic value (IK) from the limit characteristic value (GK).

3. A device according to claim 1 or 2,
characterized by
a starting means which, in case of a sufficiently low difference of the actual characteristic value (IK) from the limit characteristic value (GK), starts a burner means (19) for thermal regeneration of the particle filter (10).

## Revendications

1. Dispositif de détection de l'état de charge d'un filtre de particules (10) dans le système de gaz d'échappement d'un moteur diesel (12) pourvu d'un turbocompresseur (30), présentant :
(a) un moyen de mesure de la pression (24; 36) qui relève la pression avant le filtre de particules (10) et/ou la différence de pression de part et d'autre du filtre de particules (10);
(b) un moyen de mesure de la température (27) qui relève la température du gaz d'échappement dans la zone du filtre de particules (10);
(c) un moyen de mesure supplémentaire (28) qui relève une grandeur spécifique du moteur, proportionnelle au débit volumique du gaz traversant le moteur, de préférence la vitesse de rotation du moteur (n);
(d) et une unité de calcul (27) qui détermine une valeur caractéristique effective (IK) en tenant compte des valeurs délivrées par le moyen de mesure de la pression (24; 36), le moyen de mesure de la température (27) et le moyen de mesure supplémentaire (28) et compare cette valeur caractéristique effective (IK) à une valeur caractéristique limite prédéfinie (GK),
caractérisé en ce que
(e) un second moyen de mesure de la pression (34) est prévu pour relever la pression du courant gazeux amené au moteur diesel (12);
(f) un second moyen de mesure de la température (35) est prévu pour relever la température du courant gazeux amené au moteur diesel (12);
(g) et en ce que l'unité de calcul (29) détermine la valeur caractéristique effective en tenant compte de plus des valeurs délivrées par le second moyen de mesure de la pression (34) et par le second moyen de mesure de la température (35).

2. Dispositif selon la revendication 1,
caractérisé par
un indicateur servant à indiquer que la valeur caractéristique limite (GK) a été atteinte et/ou la différence entre la valeur caractéristique limite (GK) et la valeur caractéristique effective (IK).

3. Dispositif selon la revendication 1 ou 2,
caractérisé par
un dispositif de démarrage qui met en marche un moyen de brûlage (19) pour la régénération thermique du filtre de particules (10) lorsque la différence entre la valeur caractéristique limite (GK) et la valeur caractéristique effective (IK) est suffisamment petite.
